# EUROPÄISCHE PATENTSCHRIFT

(11) **EP 3 233 595 B1**
(45) Veröffentlichungstag und Bekanntmachung des Hinweises auf die Patenterteilung: **22.08.2018**
(21) Anmeldenummer: 15805490.8
(22) Anmeldetag: 08.12.2015
(51) Int. Cl.: B60T 7/12, B60T 17/22

(54) **BEWEGUNGSERKENNUNG EINES GEPARKTEN FAHRZEUGES**
DETECTION OF MOVEMENT OF A PARKED VEHICLE
DÉTECTION DE MOUVEMENT D'UN VÉHICULE STATIONNÉ

(30) Priorität: 15.12.2014 DE 102014225831
(43) Veröffentlichungstag der Anmeldung: 25.10.2017
(73) Patentinhaber: Continental Teves AG & Co. OHG, 60488 Frankfurt (DE)
(72) Erfinder: MARON, Christof, 61250 Usingen (DE); SCHUBERT, Stefan, 61381 Friedrichsdorf (DE)
(86) Internationale Anmeldenummer: PCT/EP2015/078910
(87) Internationale Veröffentlichungsnummer: WO 2016/096522

(56) Entgegenhaltungen:
- EP-A1- 1 445 162
- WO-A1-02/46016
- DE-A1- 10 021 601
- DE-A1- 19 620 491
- DE-A1-102005 052 160
- DE-A1-102011 003 183
- DE-A1-102011 079 362
- DE-A1-102014 006 069
- GB-A- 2 499 696
- US-A- 5 667 282

## Beschreibung

Die Erfindung betrifft ein Verfahren zum Erkennen einer Bewegung eines als geparkt abgestellten Fahrzeuges, ein Verfahren zum Nachspannen einer Parkbremse und eine Steuervorrichtung zur Durchführung wenigstens eines der Verfahren.

Aus der DE 10 2011 079 362 A1 ist ein Verfahren zum Nachspannen einer Parkbremse für ein Fahrzeug bekannt, die das Fahrzeug im Stillstand hält, wenn das Fahrzeug geparkt abgestellt ist.

Aus der WO 02/46016 A1 ist ein Verfahren zum Betrieb einer Feststellbremsanlage im abgestellten Zustand mit einer Steuereinheit bekannt, wobei unter Verarbeitung mindestens einer fahrzeugspezifischen Kenngröße, die durch Meßvorgänge per Sensor in bestimmten, aufeinanderfolgenden, Zeitabständen gewonnen wird, jeweils ein aktueller Sollwert zur Vorgabe der Bremskraft für die Feststellbremse bestimmt wird.

Es ist Aufgabe der vorliegenden Erfindung, das Verfahren zum Nachspannen der Parkbremse zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung umfasst ein Verfahren zum Erkennen einer Bewegung eines als geparkt abgestellten Fahrzeuges, die Schritte:
- Erfassen einer eine Bewegung des Fahrzeuges beschreibenden Bewegungsgröße,
- Integrieren der Bewegungsgröße in Abhängigkeit einer Bewegungsrichtung des Fahrzeuges zu einem Bewegungsweg, und
- Entscheiden auf die zu erkennende Bewegung, wenn der Bewegungsweg eine vorbestimmte Bedingung erfüllt.

Dem angegebenen Verfahren liegt die Überlegung zugrunde, dass das eingangs genannte Nachspannen der Parkbremse basierend auf einer Rollüberwachung durchgeführt werden könnte, im Rahmen derer eine Bewegung des Fahrzeuges erkannt wird, wenn das Fahrzeug geparkt ist und damit vermeintlich als stillstehend angenommen wird. Hierdurch könnte unmittelbar sichergestellt werden, dass die Zuspannkraft der Parkbremse für den tatsächlichen Stillstand des Fahrzeuges ausreichend hoch aber nicht in unerwünschter Weise zu hoch ist.

Problematisch ist jedoch, dass eine Bewegung des Fahrzeuges nicht zwangsläufig aus einem Rollen des Fahrzeuges resultieren muss. Da Fahrzeugbewegungen aufgrund einer nicht unendlich hohen Steifheit der Parkbremse grundsätzlich möglich sind, kann es beim Einsteigen in das Fahrzeug, beim Aussteigen aus dem Fahrzeug oder beim Be- und Entladen des Fahrzeuges zu Bewegungen des Fahrzeuges kommen, die dann in unerwünschter Weise als Rollbewegung interpretiert werden können. Hierbei handelt es sich jedoch um vergleichsweise kleine Wackelbewegungen des Fahrzeuges, die jedoch selbst mit einem erhöhten Nachspannen der Parkbremse nicht vermieden werden können.

Wenn die Parkbremse daher basierend auf einer Rollbewegung des Fahrzeuges nachgespannt werden soll, sollte die Rollbewegung klar von den zuvor genannten kleinen Wackelbewegungen unterschieden werden. Hier greift das angegebene Verfahren mit der Überlegung an, dass die kleinen Wackelbewegungen schlussendlich Schwingungsbewegungen sind. Ein sich aus den Schwingungsbewegungen ergebender Schwingungsweg hebt sich daher aufgrund seines Bewegungsrichtungswechsels über einen vorbestimmten Betrachtungszeitraum auf. Bei einer Rollbewegung ist das nicht der Fall. Zwar kann grundsätzlich auch eine Rollbewegung eine Schwingungsbewegung mit einer sehr hohen Schwingungsamplitude sein, diese Schwingungsbewegung ist jedoch gegenüber den zuvor erläuterten, vergleichsweise kleinen Wackelbewegungen groß, so dass sich der Rollbewegungsweg nicht über den vorbestimmten Betrachtungszeitraum aufhebt.

Zweckmäßigerweise kann in dem angegebenen Verfahren die vorbestimmte Bedingung für den Bewegungsweg als Wegschranke definiert werden, die der Bewegungsweg innerhalb des zuvor erläuterten Betrachtungszeitraumes überschreiten sollte, damit auf eine Rollbewegung entschieden wird. Je kleiner der vorbestimmte Zeitraum hierbei gewählt wird, desto mehr der zuvor genannten Wackelbewegungen werden als Rollbewegung erkannt.

Die Verwendung einer Bewegungsschranke und eines vorbestimmten Betrachtungszeitraum als vorbestimmte Bedingung ist jedoch nicht einschränkend zu sehen. Vielmehr kann die vorbestimmte Bedingung beliebig definiert werden. Beispielsweise könnte die vorbestimmte Bedingung auch in einem Frequenzbereich des Bewegungsweges definiert werden, wobei auf die zu erkennende Bewegung entschieden werden kann, wenn der Bewegungsweg ausreichend kleine (Bewegungs-)Frequenz-Anteile aufweist.

Zur Bestimmung des Bewegungsweges wird eine die Bewegung des Fahrzeuges beschreibende Bewegungsgröße betrachtet, die beliebig wählbar ist. So lässt sich die Bewegung beispielsweise aus der Beschleunigung des Fahrzeuges oder der Fahrzeuggeschwindigkeit ableiten. Ein weiteres zur Ausführung bevorzugtes Beispiel ist in den Unteransprüchen beschrieben.

In einer Weiterbildung des angegebenen Verfahrens umfasst das Fahrzeug Räder mit je einem Raddrehzahlsensor zur Ausgabe von einer Drehzahl des jeweiligen Rades abhängiger Drehzahlpulse, wobei die Bewegungsgröße durch die Drehzahlpulse beschrieben wird. Durch die Verwendung der ohnehin am Fahrzeug vorhandenen Raddrehzahlsensoren kann das angegebene Verfahren kostengünstig am Fahrzeug implementiert werden, weil zur Erfassung der zur Durchführung des angegebenen Verfahrens notwendigen Messgrößen keine neuen Sensoren am Fahrzeug angebracht werden müssen.

In einer zusätzlichen Weiterbildung des angegebenen Verfahrens wird die Bewegungsrichtung basierend auf einer Gegenüberstellung der Drehzahlpulse aus dem Raddrehzahlsensor eines ersten Rades der Räder des Fahrzeuges und der Drehzahlpulse aus dem Raddrehzahlsensor eines zweiten Rades der Räder des Fahrzeuges bestimmt. Basierend auf der Gegenüberstellung können die Drehzahlpulse der beiden Raddrehzahlsensoren verglichen werden, um beispielsweise aus deren zeitlichen Verlauf auf eine Umkehr der Bewegungsrichtung zu schließen. Wird die Bewegungsrichtung beispielsweise anfangs willkürlich festgelegt, kann so über die Zeit auf die oben genannte Schwingungsbewegung geschlossen werden. Ob die anfänglich willkürlich festgelegte Bewegungsrichtung richtig oder falsch ist, ist dabei unerheblich, weil mit dem angegebenen Verfahren schlussendlich nur geprüft werden soll, ob die zu erkennende eine Schwingungsbewegung ist oder nicht, und ob sich der resultierende Bewegungsweg aufhebt oder nicht.

In einer zusätzlichen Weiterbildung des angegebenen Verfahrens umfasst die Gegenüberstellung einen Vergleich, ob zeitlich auf einen Drehzahlpuls aus dem Raddrehzahlsensor des ersten Rades des Fahrzeuges unmittelbar zwei Drehzahlpulse aus dem Raddrehzahlsensor des anderen Rades des Fahrzeuges folgen. Der Weiterbildung liegt die Überlegung zugrunde, dass der oben genannte Bewegungsrichtungswechsel zu einer zeitlich achsensymmetrischen Erzeugung der Drehzahlpulse bezogen auf den Zeitpunkt des Bewegungsrichtungswechsels führt. Da die Drehzahlsensoren die Drehzahlpulse prinzipbedingt (beispielsweise aufgrund von Kurvenfahrten, u.s.w.) niemals zeitlich synchron zueinander ausgeben, führt ein Bewegungsrichtungswechsel des Fahrzeuges dazu, dass zwei Drehzahlpulse des ersten Rades zeitlich zwischen zwei Drehzahlpulsen des zweiten Rades ausgegeben werden, was dann als Kriterium zum Erkennen des Bewegungsrichtungswechsels herangezogen werden kann.

Mit den zuvor beschriebenen Weiterbildungen lassen sich Wackelbewegungen des Fahrzeuges von Rollbewegungen des Fahrzeuges zumindest in Längsrichtung sauber unterscheiden. Wenn jedoch das Fahrzeug beispielsweise beim Schließen der Tür in Querrichtung zum Wackeln angeregt wird, dann treten die zuvor genannten Drehzahlpulse völlig zufällig und nicht mehr vorhersagbar auf.

Hier greift eine andere Weiterbildung des angegebenen Verfahrens mit den folgenden Schritten an:
- Erfassen einer eine Vergleichsbewegung des Fahrzeuges beschreibenden Vergleichsbewegungsgröße,
- Integrieren der gemessenen Vergleichsbewegungsgröße in Abhängigkeit einer Vergleichsbewegungsrichtung zu einem Vergleichsbewegungsweg, und
- Entscheidung auf die zu erkennende Bewegung, wenn sowohl der Bewegungsweg als auch der Vergleichsbewegungsweg die vorbestimmte Bedingung erfüllt.

Der Weiterbildung liegt die Überlegung zugrunde, dass bei einer tatsächlichen Rollbewegung die Raddrehzahlsensoren aller Räder die Drehzahlpulse mit einem gleichen Muster erzeugen. Ähnliches gilt, wenn die Bewegungsgröße auch mit anderen Messaufnehmern als mit Drehzahlsensoren erfasst wird. Das Vorliegen dieses gleichen Musters wird im Rahmen der vorliegenden Weiterbildung mit der Vergleichsbewegungsgröße überprüft. Erst wenn die zu erkennende Bewegung basierend auf der Bewegungsgröße und der Vergleichsbewegungsgröße erfasst wird, kann tatsächlich eine Wackelbewegung des Fahrzeuges ausgeschlossen und auf eine Rollbewegung geschlossen werden.

In einer besonderen Weiterbildung des angegebenen Verfahrens wird die Vergleichsbewegungsgröße durch die Drehzahlpulse beschrieben und die Vergleichsbewegungsrichtung basierend auf einer Vergleichsgegenüberstellung der Drehzahlpulse aus den Raddrehzahlsensoren wenigstens zweier Räder des Fahrzeuges bestimmt, von denen wenigstens ein Rad ein drittes Rad der Räder des Fahrzeuges ist. Auf diese Weise kann vermieden werden, dass die zu erkennende Bewegung zweimal auf der gleichen Bewegungsgröße des Fahrzeuges ausgewertet und damit irrtümlich auf eine Rollbewegung des Fahrzeuges geschlossen wird.

In einer noch anderen Weiterbildung des angegebenen Verfahrens sind eine Anzahl an der Entscheidung auf die zu erkennende Bewegung zugrundeliegenden Vergleichsbewegungswegen und/oder die vorbestimmte Bedingung von einer Steigung eines Untergrundes abhängig, auf dem das Fahrzeug steht. Hierbei sollte die Entscheidung desto empfindlicher ausgestaltet werden, desto steiler der Untergrund ist.

In einer weiteren Weiterbildung umfasst das angegebene Verfahren den Schritt Zurücksetzen des Bewegungsweges und/oder des Vergleichsbewegungsweges, wenn der Bewegungsweg und/oder der Vergleichsbewegungsweg eine insbesondere von der vorbestimmten Bedingung verschiedene weitere vorbestimmte Bedingung erfüllt.

Gemäß einem weiteren Aspekt der Erfindung umfasst ein Verfahren zum Nachspannen einer Parkbremse, die ein geparkt abgestelltes Fahrzeug im Stillstand hält, die Schritte:
- Erkennen einer Bewegung des geparkt abgestellten Fahrzeug mit einem Verfahren nach einem der vorstehenden Ansprüche,
- Nachspannen der Parkbremse basierend auf der erkannten Bewegung.

Gemäß einem weiteren Aspekt der Erfindung ist eine Steuervorrichtung eingerichtet, eines der angegebenen Verfahren auszuführen.

In einer Weiterbildung der angegebenen Steuervorrichtung weist die angegebene Vorrichtung einen Speicher und einen Prozessor auf. Dabei ist das angegebene Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Gemäß einem weiteren Aspekt der Erfindung umfasst ein Computerprogramm Programmcodemittel, um alle Schritte eines der angegebenen Verfahren durchzuführen, wenn das Computerprogramm auf einem Computer oder einer der angegebenen Vorrichtungen ausgeführt wird.

Gemäß einem weiteren Aspekt der Erfindung enthält ein Computerprogrammprodukt einen Programmcode, der auf einem computerlesbaren Datenträger gespeichert ist und der, wenn er auf einer Datenverarbeitungseinrichtung ausgeführt wird, eines der angegebenen Verfahren durchführt.

Gemäß einem weiteren Aspekt der Erfindung umfasst ein Fahrzeug eine der angegebenen Steuervorrichtungen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 eine schematische Ansicht eines auf einer Straße geparkten Fahrzeuges,
Fig. 2 eine schematische Ansicht des Fahrzeuges aus Fig. 1,
Fig. 3 eine schematische Ansicht eines Regelkreises zum Nachspannen einer Bremse in dem Fahrzeug der Fig. 2,
Fig. 4 eine schematische Ansicht eines Drehzahlsensors in dem Fahrzeug der Fig. 2,
Fig. 5 ein Ausgangssignal aus dem Drehzahlsensor der Fig. 4,
Fig. 6 eine Vorrichtung zur Bearbeitung des Ausgangssignals der Fig. 5,
Fig. 7 zwei Ausgangssignale aus zwei verschiedenen Drehzahlsensoren in dem Fahrzeug der Fig. 2 in einer ersten Bewegungssituation des Fahrzeuges der Fig. 2,
Fig. 8 die zwei Ausgangssignale der Fig. 7 in einer zweiten Bewegungssituation des Fahrzeuges der Fig. 2, und
Fig. 9 bis 12 Alternativen für die Vorrichtung der Fig. 6 zur Bearbeitung des Ausgangssignals der Fig. 5 zeigen.

In den Figuren werden gleiche technische Elemente mit gleichen Bezugszeichen versehen und nur einmal beschrieben.

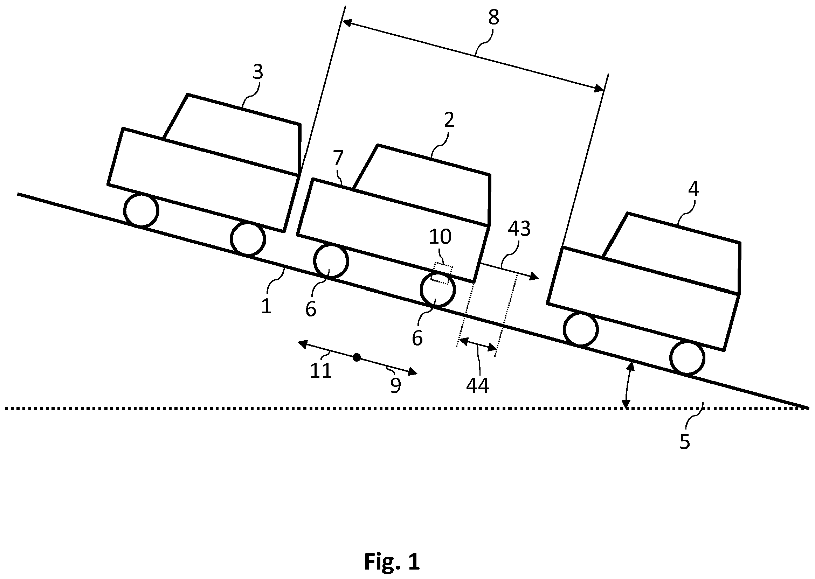

Es wird auf Fig. 1 Bezug genommen, die ein auf einem Untergrund in Form einer Straße 1 geparktes Fahrzeug 2 zwischen einem zweiten Fahrzeug 3 und einem dritten Fahrzeug 4 zeigt. Die Straße 1 ist mit einer Steigung 5 geneigt.

Das Fahrzeug 2 umfasst ein auf Rädern 6 fahrbar getragenes Chassis 7 und steht in einer Parklücke 8 zwischen dem zweiten Fahrzeug 3 und dem dritten Fahrzeug 4. Damit das Fahrzeug 2 dabei nicht durch eine durch die Steigung 5 bedingte Hangabtriebskraft 9 die Straße herunterrollt und beispielsweise mit dem dritten Fahrzeug 4 kollidiert, wird es über eine noch zu beschreibende Parkbremse 10 in dieser Parklücke 8 im Stillstand gehalten.

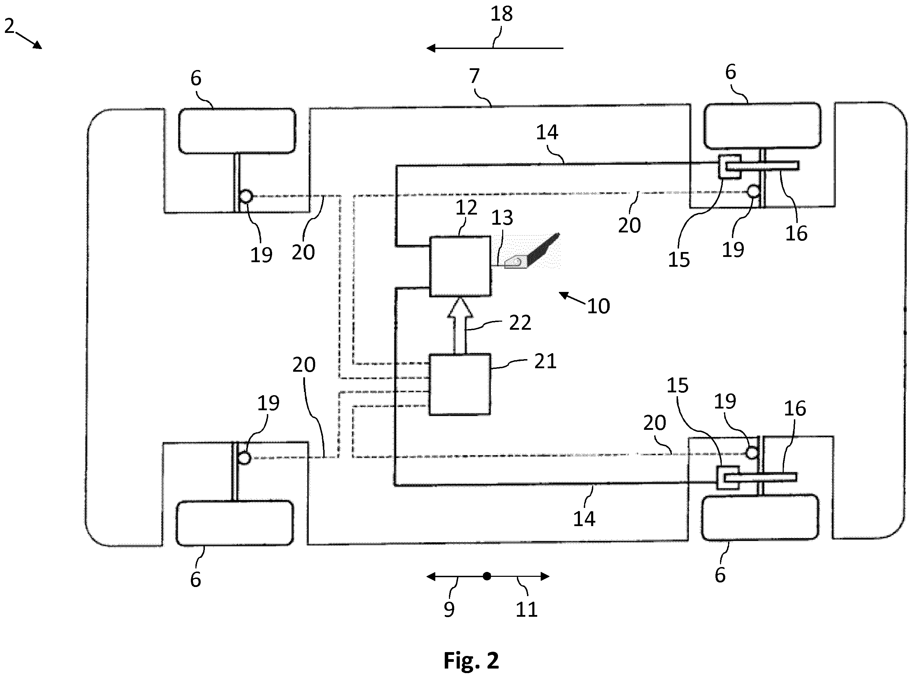

Im Einzelnen hält die Parkbremse 10 das Fahrzeug 2 mit einer Haltekraft 11, die der Hangabtriebskraft 9 entgegenwirkt. Darauf soll nachstehend unter Bezugnahme auf Fig. 2 näher eingegangen werden.

Die Parkbremse 10 des Fahrzeuges umfasst eine Parkbremssteuereinrichtung 12, die basierend auf einem Bremswunsch 13 mit Bremssteuersignalen 14 ortsfest zum Chassis 10 angebrachte Bremsaktuatoren 15, wie Bremsbeläge ansteuert, um diese zuzuspannen. Durch das Zuspannen werden ortsfest zu den Rädern 6 angeordnete Bremsangriffselemente 16, wie Bremstrommeln oder Bremsscheiben von den Bremsaktuatoren 15 mit je einer nicht weiter dargestellten Klemmkraft eingeklemmt, so dass eine Drehung der Räder 6 gegenüber dem Chassis 7 blockiert und eine Bewegung des Fahrzeuges 2 verhindert wird. Auf diese Weise wird die Haltekraft 11 erzeugt, die das Fahrzeug 2 im Stillstand halten soll. Dabei können die Bremssteuersignale 14 in beliebiger Weise, beispielsweise hydraulisch, pneumatisch oder mit Seilzügen übertragen werden. In als Personenkraftwägen ausgeführten Fahrzeugen werden die Bremssteuersignale 14 häufig elektrisch übertragen, weshalb auch von einer elektronischen Parkbremse gesprochen wird.

Die Haltekraft 11 ist dabei in erster Linie von den Klemmkräften abhängig, mit denen die Bremsaktuatoren 15 die Bremsangriffselemente 16 einklemmen. Die Höhe der Klemmkräfte wird wiederrum von den Bremssteuersignalen 14 vorgegeben. Werden daher mit den Bremssteuersignalen 14 keine ausreichend hohen Klemmkräfte vorgegeben, kann es passieren, dass die Haltekraft 11 nicht ausreicht, die Hangabtriebskraft 9 aufzuheben und das Fahrzeug 2 im Stillstand zu halten. Andererseits sollten die Klemmkräfte aber auch nicht unnötig hoch sein, damit die mechanischen Belastungen in der Parkbremse 10 beispielweise für eine hohe Lebensdauer möglich gering bleiben.

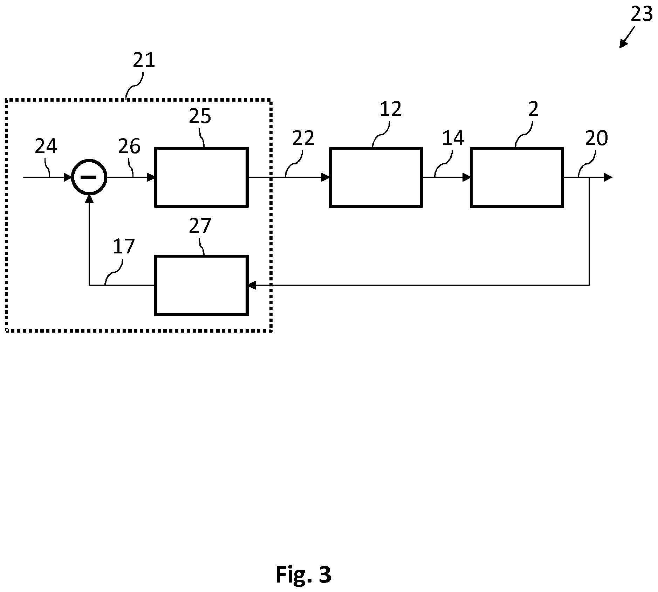

Hier greift die vorliegende Ausführung mit dem Vorschlag an, die Bremssteuersignale 14 und damit die Haltekraft 11 in Abhängigkeit einer in Fig. 3 angedeuteten Bewegung 17 des Fahrzeuges 2 einzustellen. Grundlage zur Erkennung der Bewegung 17 des Fahrzeuges 2 kann grundsätzlich eine Messgröße aus einem beliebigen Sensor in dem Fahrzeug 2 sein, die eine Bewegungsgeschwindigkeit 18 des Fahrzeuges 2 enthält.

Zweckmäßigerweise sollte diese die Bewegungsgeschwindigkeit 18 enthaltende Messgröße mit Sensoren erfasst werden, die bereits am Fahrzeug 2 vorhanden sind. Hierzu bieten sich beispielsweise Drehzahlsensoren 19 an, die gewöhnlich an jedem Rad 6 des Fahrzeuges 2 vorhanden sind, um eine Raddrehzahl 20 des jeweiligen Rades 6 zu erfassen. Diese Raddrehzahlen 20 werden im Fahrzeug 2 für verschiedene Anwendungen, wie beispielweise die Fahrdynamikregelung oder Einparkassistenten verwendet. Unter anderem kann aus den Raddrehzahlen 20 auch die sogenannte Übergrundgeschwindigkeit des Fahrzeuges 2 abgeleitet werden, die grundsätzlich als Bewegungsgeschwindigkeit 18 verwendet werden könnte.

Um eine Bewegung des Fahrzeuges 2 jedoch möglichst schnell zu erkennen und damit die Reaktionszeiten beim Einstellen der Haltekraft 11 so gering wie möglich zu halten, wird im Rahmen der vorliegenden Ausführung vorgeschlagen, die Bewegung des Fahrzeuges 2 direkt aus den Raddrehzahlen 19 zu erkennen. Dazu werden die Raddrehzahlen 20 einer Bewegungsverhinderungseinrichtung 21 zugeführt. Die Bewegungsverhinderungseinrichtung 21 erkennt mit einer Bewegungserkennungseinrichtung 27 in einer noch zu beschreibenden Weise die Bewegung 17 des Fahrzeuges 2.

Im Falle der erkannten Bewegung 17 gibt die Bewegungsverhinderungseinrichtung 21 ein Bremsanforderungssignal 22 aus, basierend auf dem die Parkbremssteuereinrichtung 12 dann die Bremssteuersignale 14 geeignet einstellen kann, um über die oben genannten Klemmkräfte die Haltekraft 11 ausreichend hoch einzustellen.

Abstrakt gesehen stellt die Bewegungsverhinderungseinrichtung 21 einen Teil eines in Fig. 3 dargestellten Regelkreises 23 dar, in dem die erkannte Bewegung 17 als Istgröße verwendet und einer Sollgröße 24 vor die Bewegung 17 von Null gegenübergestellt wird. In einem Regler 25 in der Bewegungsverhinderungseinrichtung 21 wird eine Regeldifferenz 26 zwischen der erkannten Bewegung und der Sollgröße 24 erfasst und das Bremsanforderungssignal 22 derart eingestellt, dass die Bewegung 17 an die Sollgröße 24 und damit eine Bewegung von Null angeglichen wird.

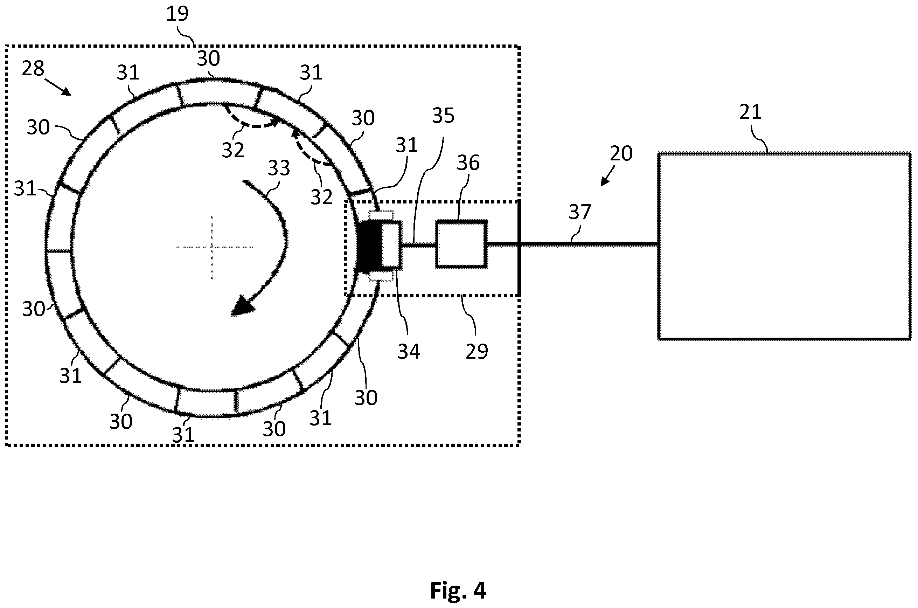

Bevor auf die Erkennung der Bewegung näher eingegangen wird, soll zunächst die Erfassung der die Bewegungsgeschwindigkeit 18 enthaltenden Messgröße und damit der Raddrehzahlen 20 näher eingegangen werden. Hierzu wird auf Fig. 4 Bezug genommen, die eine schematische Ansicht des Raddrehzahlsensors 19 zeigt.

Jeder Drehzahlsensor 19 ist in der vorliegenden Ausführung als aktiver Drehzahlsensor ausgeführt, der ein drehfest am Rad 6 befestigtes Geberelement in Form einer Encodersscheibe 28 und eine ortsfest zum Chassis 7 befestige Sensorschaltung umfasst, die nachstehend der Einfachheit halber Lesekopf 29 genannt wird.

Die Encoderscheibe 28 besteht in der vorliegenden Ausführung aus aneinandergereihten Magnetnordpolen 30 und Magnetsüdpolen 31, die gemeinsam ein physikalisches Feld in Form eines Gebermagnetfeldes 32 erregen. Dieses Gebermagnetfeld 32 ist in Fig. 3 der Übersichtlichkeit halber mit zwei gestrichelt dargestellten Feldlinien angedeutet. Dreht sich die am Rad 6 befestigte Encoderscheibe 28 mit diesem in eine Drehrichtung 33, dreht sich das Gebermagnetfeld 32 so mit.

Der zum Chassis 7 ortsfeste Lesekopf 29 umfasst in der vorliegenden Ausführung einen Messfühler 34, der das Gebermagnetfeld 32 des sich mit dem Rad 6 drehenden Encoderscheibe 28 erfasst und in ein Gebersignal 35 umwandelt. Prinzipbedingt ist das Gebersignal 35 sinusförmig mit einer Frequenz, die unmittelbar abhängig von der Drehzahl 20 ist. In einer Signalauswerteschaltung 36 wird das sinusförmige Gebersignal 35 aus technischen Gründen in ein Pulssignal 37 gewandelt und an die Bewegungserkennungseinrichtung 27 in der Bewegungsverhinderungseinrichtung 21 ausgeben. Dabei bleibt die Frequenz des Pulssignals 37 gleich der Frequenz des Gebersignals 35 und somit die Information über die Drehzahl 20 erhalten. Weitere Hintergrundinformationen zu aktiven Raddrehzahlsensoren sind im einschlägigen Stand der Technik, wie beispielsweise in der DE 101 46 949 A1 zu finden.

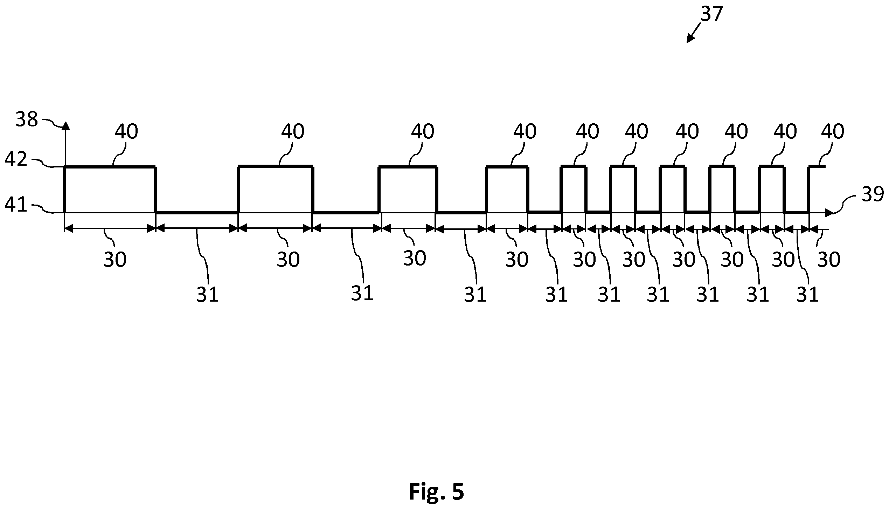

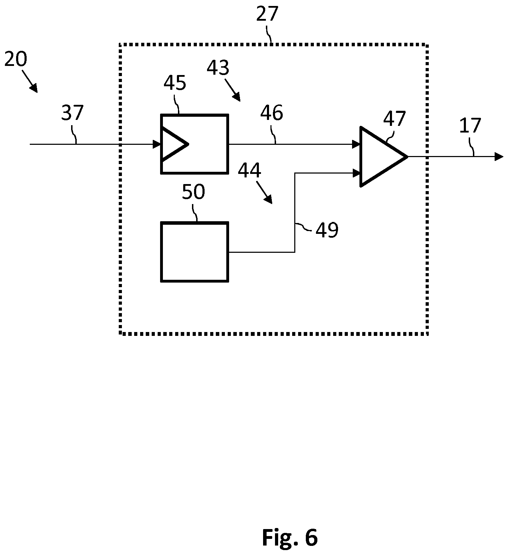

Nachstehend wird auf eine mögliche Erkennung der Bewegung 17 in der Bewegungserkennungseinrichtung 27 basierend auf den Raddrehzahlen 20 unter Bezugnahme auf Fig. 5 und 6 näher eingegangen, die das Pulssignal 37 in einem Pulspegel 38 - Zeit 39 - Diagramm zeigt.

Das Pulssignal 37 deutet eine beschleunigende Bewegung 17 des Fahrzeuges 2 an. Das lässt sich daran erkennen, dass sich die Encoderscheibe 28 immer schneller dreht. Entsprechend wer-den Pulse 40 in dem Pulssignal 37, die zwischen einem ersten Pegelwert 41 und einem zweiten Pegelwert 42 hin- und herpulsieren, über die Zeit 39 immer schmäler. Mit anderen Worten nimmt die Zahl der Pulse 40 über die Zeit 39 mit steigender Bewegungsgeschwindigkeit 18 des Fahrzeuges 2 zu. Die beiden Pegelwerte 41, 42 sind davon abhängig ob die Encoderscheibe 28 mit einem Magnetnordpol 30 oder mit einem Magnetsüdpol 31 unter dem Lesekopf 34 steht.

Eine Bewegung 17 des Fahrzeuges 2 liegt verständlicherweise dann vor, wenn das Fahrzeug 2 erkennbar einen in Fig. 1 angedeuteten Bewegungsweg 43 zurückgelegt hat. Hierzu kann für den Bewegungsweg 43 eine vorbestimmte Bedingung beispielsweise in Form einer in Fig. 1 angedeuteten Wegschranke 44 definiert werden. Überschreitet der Bewegungsweg 43 die Wegschranke 44 wird auf die Bewegung 17 des Fahrzeuges 2 entschieden. Der Bewegungsweg 44 ergibt sich aus einer Integration der Bewegungsgeschwindigkeit 18 über die Zeit 39, so dass der zuvor erläuterte Gedanke recht einfach umsetzbar ist, wenn die Bewegungsgeschwindigkeit 18 unmittelbar vorliegt.

Im Falle der vorliegenden Ausführung soll die Bewegung in der Bewegungserkennungseinrichtung 27 aus wenigstens den Raddrehzahlen 20 aus wenigstens einem der Raddrehzahlsensoren 19 erkannt werden. Zum Integrieren der Bewegungsgeschwindigkeit 18 und daher zum Erfassen des Bewegungsweges 43 können hierbei die Pulse 40 des Pulssignals 37 in einem Zähler 45 gezählt werden. Ein so erhaltener Wegzählwert 46 ist unmittelbar abhängig von dem Bewegungsweg 44 und kann in einem Vergleichsglied 47 mit einer von der Wegzählschranke 48 abhängigen Wegzählschranke 49 verglichen werden, die in einem Speicher 50 hinterlegt sein kann. Überschreitet der Wegzählwert 46 die Wegzählschranke 48, dann wird mit dem Vergleichsglied 47 auf die Bewegung 17 entschieden.

Basierend auf der so erkannten Bewegung 17 kann dann der Regelkreis 23 entsprechend in das Fahrzeug 2 in der oben beschriebenen Weise eingreifen.

Die zu erkennende Bewegung 17 des Fahrzeuges 2 soll dabei eine Rollbewegung des Fahrzeuges 2 sein. Insbesondere sollen unter die zu erkennenden Bewegung keine Wackelbewegungen fallen, die entstehen, wenn das Fahrzeug 2 durch einen Stoß hin- und herwackelt. Derartige Wackelbewegungen sind nicht unüblich, weil am Fahrzeug 2 die Bremsaktuatoren 15 zu den Bremsangriffselementen 16 schwimmend angeordnet sind, und daher das Fahrzeug 2 im geparkten Zustand nicht ideal rollfrei gehalten wird. In der Regel weist die Encoderscheibe 28 über neunzig Pole 30, 31 auf, so dass bereits kleinste Rollbewegungen von wenigen Grad Pulssignale 37 mit Pulsen 40 erzeugen können, die bei einem hin- und herwackeln des Fahrzeuges vervielfacht werden und so ungewollt zu einer erkannten Bewegung 17 und damit ungewollt zu einem stärkeren Zuspannen der Bremsaktuatoren 15 führen können.

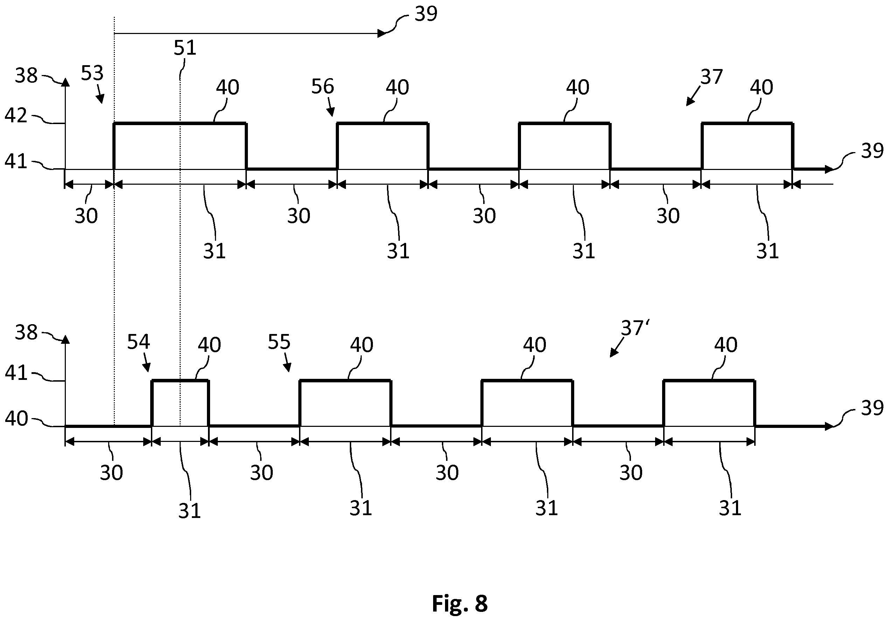

Um diese Wackelbewegungen bei der Erkennung der Bewegung des Fahrzeuges 2 auszublenden, wird im vorliegenden Ausführungsbeispiel die Erkenntnis genutzt, dass die Wackelbewegung des Fahrzeuges 2 eine schwindende Bewegung mit regelmäßigen, in Fig. 8 angedeuteten Richtungsumkehrungen 51 ist. Diese Richtungsumkehrungen 51 werden im vorliegenden Ausführungsbeispiel erkannt und bei der Integration des Bewegungsweges 43 beziehungsweise des Wegzählwertes 46 mit berücksichtigt.

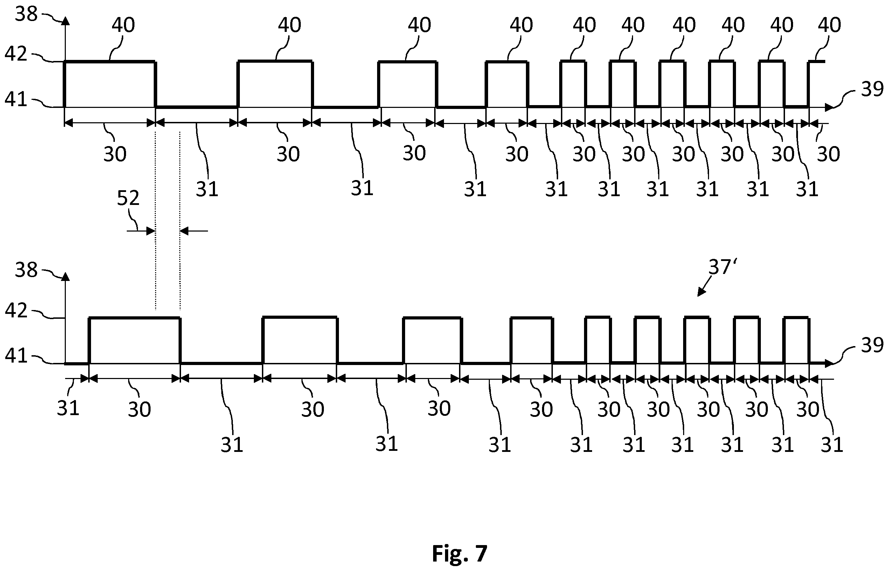

Zur Erkennung der Richtungsumkehrungen 51 wird im vorliegenden Ausführungsbeispiel die Erkenntnis genutzt, dass die Pulssignale 37, 37' in der Regel zeitlich nicht synchron miteinander verlaufen, weil sich die Räder von Zeit zu Zeit beispielsweise bei Kurvenfahrten nicht mit der gleichen Drehzahl 20 drehen. Auf diese Weise werden in Fig. 7 angedeuteten Phasenversätze 52 eingebracht, die zwischen dem Pulssignal 37 der Fig. 5 und einem weiteren Pulssignal 37' aus einem anderen Raddrehzahlsensor 19 angedeutet sind.

Wie in Fig. 8 angedeutet, bewirkt eine Richtungsumkehr 51 des Fahrzeuges 2 beispielsweise bei der auszublendenden Wackelbewegung, dass die einzelnen Pulssignale 37, 37' aus den einzelnen Raddrehzahlsensoren 19 zum Zeitpunkt der jeweiligen Richtungsumkehr 51 spiegelsymmetrisch verlaufen, mit dem Effekt, dass auf einen in einem Pulssignal 37 erzeugten Puls 40 vor der Richtungsumkehr 51, der in Fig. 8 der Übersichtlichkeit halber mit dem Bezugszeichen 53 versehen ist, ein erster Puls 40 und ein zweiter Puls 40 in dem anderen Pulssignal 37' folgen, die in Fig. 8 der Übersichtlichkeit halber entsprechend mit den Bezugszeichen 54 und 55 versehen sind, bevor in dem einen Pulssignal 37 mit dem Puls 53 ein weiter Puls 40, der in Fig. 8 der Übersichtlichkeit halber mit dem Bezugszeichen 56 versehen ist, folgt. Das heißt, dass im Falle einer Richtungsumkehr 51 auf einen Puls 53 in einem der Pulssignale 37 zwei Pulse 54, 55 in dem anderen Pulssignal 37' detektiert werden, bevor in dem Pulssignal 37 wieder ein Puls detektiert wird. Ein derartiger Verlauf der Pulse 40 in den Pulssignalen 37, 37' kann bei einer Bewegung 17 in Form einer Rollbewegung des Fahrzeuges 2 aus dem Stand prinzipbedingt nicht auftreten, so dass dieser Verlauf der Pulse 40 in den Pulssignalen 37, 37' als Erkennungskriterium für die Richtungsumkehr 51 herangezogen werden kann.

Daher wird im Rahmen der vorliegenden Ausführung vorgeschlagen, auf die Richtungsumkehr 51 basierend auf einer Gegenüberstellung zweier Pulssignale 37, 37' zu entscheiden, wenn das in Fig. 8 dargestellte Szenario erkannt wird. Dann kann beispielsweise in dem Zähler 54 der Fig. 6 statt vorgezählt zurückgezählt werden, um die Verlauf des Bewegungsweges 43 bei der Wackelbewegung des Fahrzeuges 2 zu berücksichtigten.

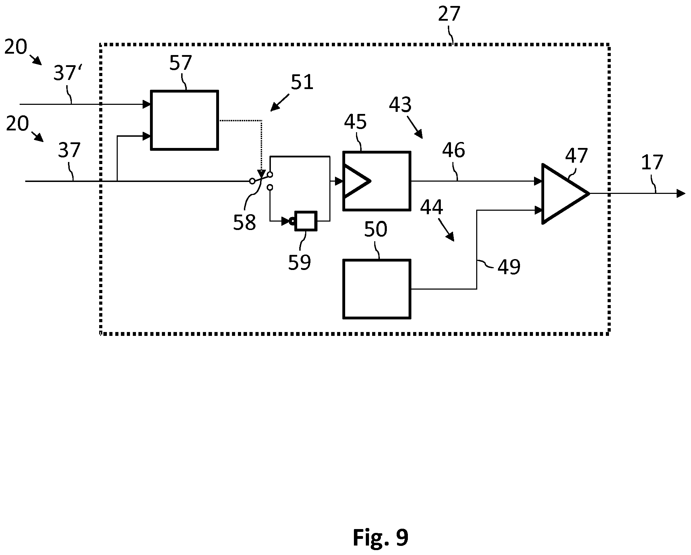

Die Entscheidung kann mit einer in Fig. 9 gezeigten Doppelpulserkennungseinrichtung 57 erfolgen, die dann einen Schalter 58 ansteuert, um eines der Pulssignale 37, dessen Pulse 40 zum Wegzählwert 46 aufgezählt werden, gegebenenfalls über ein Negierglied 59 zu leiten, um das zuvor genannte Vorzählen und Zurückzählen umzusetzen. Eine entsprechende technische Fähigkeit des Zählers 45 bei positiven Pulsen 40 Vorzuzählen und bei negativen Pulsen 40 zurückzuzählen wird dabei vorausgesetzt.

Bei einer Wackelbewegung quer zur Rollrichtung des Fahrzeuges 2 treten jedoch die Pulse an den Rädern völlig zufällig auf. Um auch in dieser Situation möglich zuverlässig eine Rollbewegung des Fahrzeuges von einer Wackelbewegung zu trennen, wird im Rahmen der vorliegenden Ausführung vorgeschlagen, die zuvor genannte Gegenüberstellung der Pulssignale 37, 37' nicht basierend auf zwei Raddrehzahlsensoren 19 des Fahrzeuges 2 sondern mindestens basierend auf drei, vorzugsweise vier Raddrehzahlsensoren 19 des Fahrzeuges 2 durchzuführen.

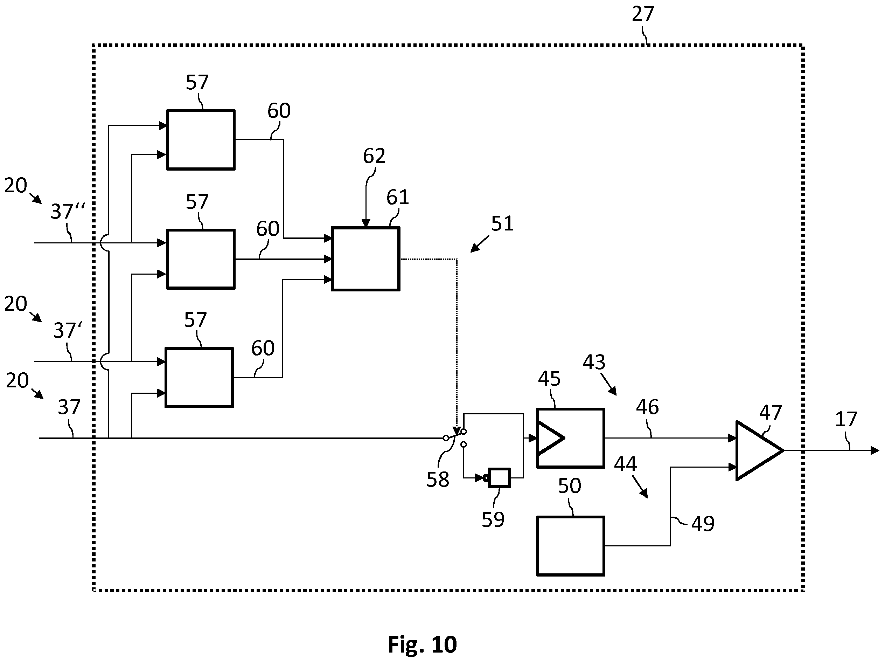

Das wird anhand von Fig. 10 verdeutlicht, in der die Pulssignale 37, 37' und 37" aus drei verschiedenen Raddrehzahlsensoren 19 beispielhaft ausgewertet werden. Die drei verschiedenen Pulssignalen 37, 37' und 37" erlauben drei Gegenüberstellungsmöglichkeiten. Vier verschiedene Pulssignale 37 würden entsprechend sechs Gegenüberstellungsmöglichkeiten erlauben. Jede Gegenüberstellungsmöglichkeit zur Erkennung eines Doppelpulses, wie in Fig. 8 erläutert, wird mit einer eigenen Doppelpulserkennungseinrichtung 57 durchgeführt, wobei jede Doppelpulserkennungseinrichtung 57 mit einem Erkennungssignal 60 das Vorliegen eines Doppelpulses anzeigt. Eine Zähleinrichtung 61 zählt die Anzahl an durch die einzelnen Erkennungssignale 60 angezeigten, erkannten Doppelpulsen in regelmäßigen Zeitabständen, beispielsweise einmal pro Softwarezyklus. Nur wenn die Anzahl an erkannten Doppelpulsen eine vorbestimmte Doppelpulszählschwelle 62 übersteigt, steuert nun die Zähleinrichtung 61 den Schalter 58 an.

Die Zähleinrichtung 61 stellt letztendlich sicher, dass ein zufällig auftretender Doppelpuls nicht als Richtungsumkehr 51 gewertet wird. Nur wenn letztendlich alle Räder 6 am Fahrzeug 2 das gleiche Verhalten zeigen, kann aus einem auftretenden Doppelpuls zuverlässig auf die Wackelbewegung des Fahrzeuges 2 geschlossen werden.

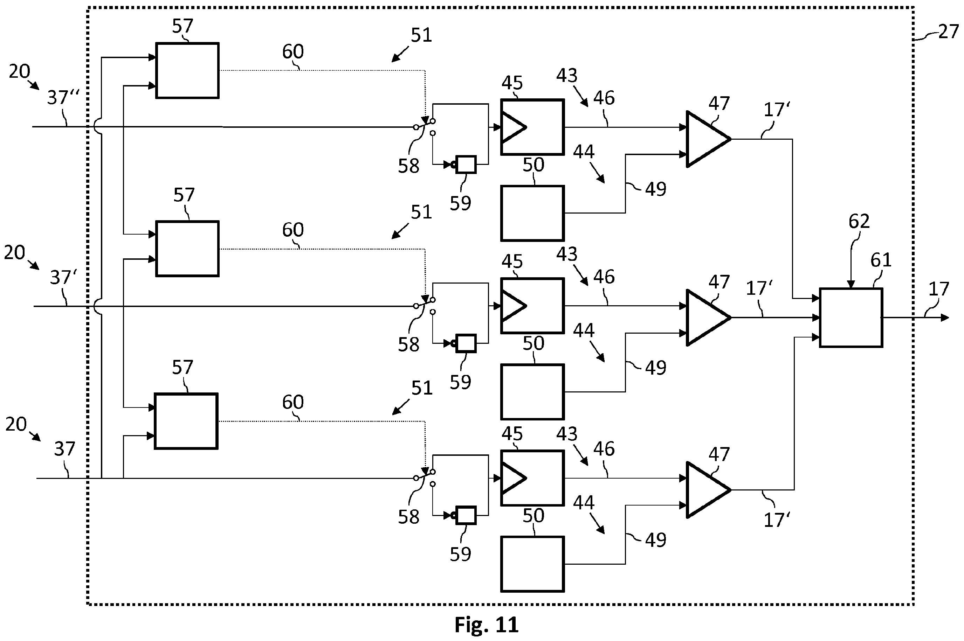

Alternativ kann auch, wie in Fig. 11 gezeigt, basierend auf jeder Gegenüberstellung eine eigene vorläufige Bewegung 17' des Fahrzeuges 2 erkannt werden, wobei die Zähleinrichtung 61 dann die Bewegung 17 des Fahrzeuges 2 anzeigt, wenn die Anzahl der vorläufigen Bewegungen die Doppelpulszählschwelle 62 übersteigt.

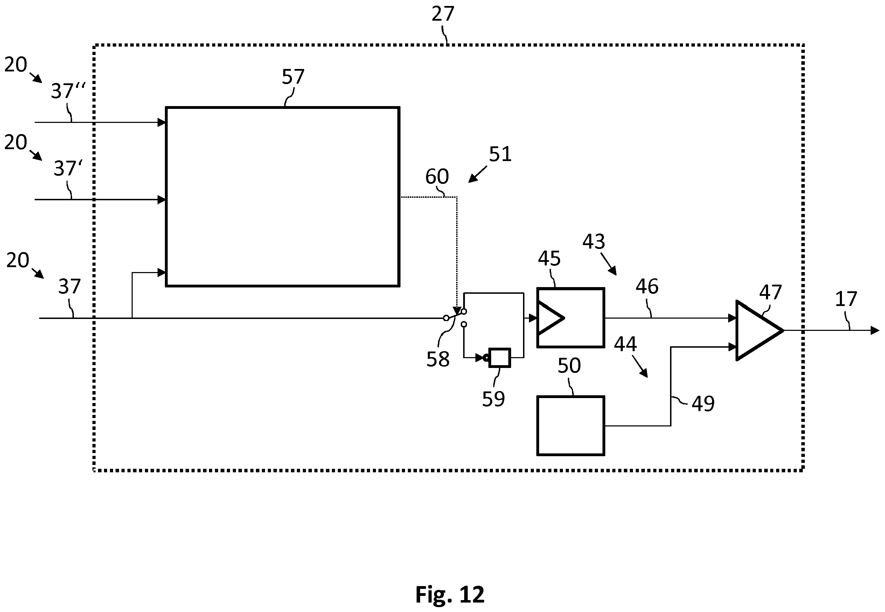

In einer in Fig. 12 angedeuteten Ausführung kann eine einzige Doppelpulserkennungseinrichtung 57 vorgesehen sein, die alle Pulssignale 37, 37', 37" empfängt und das Erkennungssignal 60 ausgibt, sobald in einem der Pulssignale 37, 37', 37" zwei unmittelbar aufeinander folgende Pulse 40 erfasst werden, ohne dass dazwischen auf einem der anderen Pulssignale 37, 37', 37" ein Puls 40 erfasst wird. In diesem Fall enthält das Erkennungssignal 60 unmittelbar die Information über die Richtungsumkehr 51.

In allen Ausführungsbeispielen könnten die Zähler 45 zurückgesetzt werden, wenn der Wegzählwert 46 eines der Zähler 45 eine Zurücksetzschranke überschreitet, die zweckmäßigerweise größer sein sollte, als die Wegzählschranke 49. Dieser Sachverhalt ist der Übersichtlichkeit halber in den Figuren nicht mehr graphisch dargestellt.

Zwar wird die Bewegungserkennungseinrichtung 27 in dem Regelkreis 23 der Fig. 3 angewendet, alternativ könnte basierend auf der erkannten Bewegung aber auch eine Alarmeinrichtung angesteuert werden, die beispielsweise den Fahrer oder andere Personen davor warnt, dass sich das Fahrzeug bewegt und die Parkbremse 10 stärker angezogen werden muss.

Ferner kann die Doppelpulszählschwelle 62 in Abhängigkeit der Steigung 5 gewählt werden, um beispielsweise die Erkennung der Bewegung 17 bei größeren Steigungen empfindlicher auszuführen.

## Patentansprüche

1. Verfahren zum Erkennen einer Bewegung (17) eines als geparkt abgestellten Fahrzeuges (2), umfassend:
- Erfassen einer eine Bewegung des Fahrzeuges (2) beschreibenden Bewegungsgröße (18), **gekennzeichnet durch**
- Integrieren der Bewegungsgröße (18) in Abhängigkeit einer Bewegungsrichtung des Fahrzeuges (2) zu einem Bewegungsweg (43), und
- Entscheiden auf die zu erkennende Bewegung (17), wenn der Bewegungsweg (43) eine vorbestimmte Bedingung (44) erfüllt.

2. Verfahren nach Anspruch 1, wobei das Fahrzeug (2) Räder (6) mit je einem Raddrehzahlsensor (19) zur Ausgabe von einer Drehzahl (20) des jeweiligen Rades (7) abhängiger Drehzahlpulse (37, 37', 37") umfasst, und wobei die Bewegungsgröße (18) durch die die Drehzahlpulse (40) beschrieben wird.

3. Verfahren nach Anspruch 2, wobei die Bewegungsrichtung basierend auf einer Gegenüberstellung (57) der Drehzahlpulse (37) aus dem Raddrehzahlsensor (19) eines ersten Rades (6) der Räder (6) des Fahrzeuges (2) und der Drehzahlpulse (37') aus dem Raddrehzahlsensor (19) eines zweiten Rades (6) der Räder (6) des Fahrzeuges (2) bestimmt wird.

4. Verfahren nach Anspruch 3, wobei die Gegenüberstellung (57) einen Vergleich umfasst, ob zeitlich auf einen Drehzahlpuls (37, 40) aus dem Raddrehzahlsensor (19) des ersten Rades (6) des Fahrzeuges (2) unmittelbar zwei Drehzahlpulse (37', 40) aus dem Raddrehzahlsensor (19) des anderen Rades (6) des Fahrzeuges (2) folgen.

5. Verfahren nach einem der vorstehenden Ansprüche, umfassend:
- Erfassen einer eine Vergleichsbewegung des Fahrzeuges (2) beschreibenden Vergleichsbewegungsgröße (18, 37'),
- Integrieren der gemessenen Vergleichsbewegungsgröße (18, 37`) in Abhängigkeit einer Vergleichsbewegungsrichtung des Fahrzeuges zu einem Vergleichsbewegungsweg, und
- Entscheidung auf die zu erkennende Bewegung (17), wenn sowohl der Bewegungsweg (43) als auch der Vergleichsbewegungsweg die vorbestimmte Bedingung (44) erfüllt.

6. Verfahren nach Anspruch 5, wobei die Vergleichsbewegungsgröße (18, 37') durch die Drehzahlpulse (40, 37') beschrieben und die Vergleichsbewegungsrichtung basierend auf einer Vergleichsgegenüberstellung (57) der Drehzahlpulse (40, 37') aus den Raddrehzahlsensoren (19) wenigstens zweier Räder (6) des Fahrzeuges (2) bestimmt wird, von denen wenigstens ein Rad (6) ein drittes Rad (6) der Räder (6) des Fahrzeuges (2) ist.

7. Verfahren nach Anspruch 5 oder 6, wobei eine Anzahl an der Entscheidung auf die zu erkennende Bewegung (17) zugrundeliegenden Vergleichsbewegungswegen und/oder die vorbestimmte Bedingung (62) von einer Steigung (5) eines Untergrundes (1) abhängig sind, auf dem das Fahrzeug (2) steht.

8. Verfahren nach einem der vorstehenden Ansprüche, umfassend:
- Zurücksetzen des Bewegungsweges (43) und/oder des Vergleichsbewegungsweges, wenn der Bewegungsweg (43) und/oder der Vergleichsbewegungsweg eine insbesondere von der vorbestimmten Bedingung (44) verschiedene weitere vorbestimmte Bedingung erfüllt.

9. Verfahren zum Nachspannen einer Parkbremse (10), die ein geparkt abgestelltes Fahrzeug (2) im Stillstand hält, umfassend:
- Erkennen einer Bewegung (17) des geparkt abgestellten Fahrzeug (2) mit einem Verfahren nach einem der vorstehenden Ansprüche,
- Nachspannen (22) der Parkbremse (14) basierend auf der erkannten Bewegung (17).

10. Steuervorrichtung (27, 21) die das Verfahren nach einem der vorstehenden Ansprüche durchführt.

## Claims

1. Method for detecting a movement (17) of a vehicle (2) which is shut down in a parked state, comprising:
- acquiring a movement variable (18) which describes a movement of the vehicle (2), **characterized by**
- integrating the movement variable (18) as a function of a direction of movement of the vehicle (2) with respect to a movement travel (43) and
- deciding on the movement (17) to be detected if the movement travel (43) satisfies a predetermined condition (44) .

2. Method according to Claim 1, wherein the vehicle (2) comprises wheels (6), each having one wheel rotational speed sensor (19) for outputting rotational speed pulses (37, 37', 37") which are dependent on a rotational speed (20) of the respective wheel (7), and wherein the movement variable (18) is described by the rotational speed pulses (40).

3. Method according to Claim 2, wherein a comparison (57) of the rotational speed pulses (37) from the wheel rotational speed sensor (19) of a first wheel (6) of the wheels (6) of the vehicle (2) and the rotational speed pulses (37') from the wheel rotational speed sensor (19) of a second wheel (6) of the wheels (6) of the vehicle (2) is used to determine the duration of movement.

4. Method according to Claim 3, wherein the comparison (57) comprises comparing whether a rotational speed pulse (37, 40) from the wheel rotational speed sensor (19) of the first wheel (6) of the vehicle (2) is directly followed chronologically by two rotational speed pulses (37', 40) from the wheel rotational speed sensor (19) of the other wheel (6) of the vehicle (2).

5. Method according to one of the preceding claims, comprising:
- acquiring a comparison movement variable (18, 37') which describes a comparison movement of the vehicle (2),
- integrating the measured comparison movement variable (18, 37') as a function of a comparison movement direction of the vehicle with respect to a comparison movement travel, and
- deciding on the movement (17) to be detected if both the movement travel (43) and the comparison movement travel satisfy the predetermined condition (44).

6. Method according to Claim 5, wherein the comparison movement variable (18, 37') is described by means of the rotational speed pulses (40, 37'), and the comparison movement direction is determined on the basis of a comparison (57) of the rotational speed pulses (40, 37') from the wheel rotational speed sensors (19) of at least two wheels (6) of the vehicle (2), at least one wheel (6) of which is a third wheel (6) of the wheels (6) of the vehicle (2).

7. Method according to Claim 5 or 6, wherein a number of comparison movements based on the decision on the movement (17) to be detected and/or the predetermined condition (62) are dependent on a gradient (5) of an underlying surface (1) on which the vehicle (2) is standing.

8. Method according to one of the preceding claims, comprising:
- resetting the movement travel (43) and/or the comparison movement travel if the movement travel (43) and/or the comparison movement travel satisfy/satisfies a further predetermined condition which is in particular different from the predetermined condition (44).

9. Method for retensioning a parking brake (10) which keeps a vehicle (2) which has been shut down in a parked state in a stationary state comprising:
- detecting a movement (17) of the vehicle (2) which has been shut down in a parked state with a method according to one of the preceding claims, and
- retensioning (22) of the parking brake (14) on the basis of the detected movement (17).

10. Control device (27, 21) which carries out the method according to one of the preceding claims.

## Revendications

1. Procédé de reconnaissance d'un mouvement (17) d'un véhicule (2) arrêté en stationnement, comprenant :
- acquisition d'une grandeur de mouvement (18) qui décrit un mouvement du véhicule (2), **caractérisé par**
- intégration de la grandeur de mouvement (18) en fonction d'une direction de mouvement du véhicule (2) en une course de mouvement (43), et
- décision relative au mouvement (17) à reconnaître lorsque la course de mouvement (43) remplit une condition prédéfinie (44).

2. Procédé selon la revendication 1, le véhicule (2) comportant des roues (6) équipées chacune d'un capteur de vitesse de rotation de roue (19) destiné à délivrer en sortie des impulsions de vitesse de rotation (37, 37', 37") dépendantes d'une vitesse de rotation (20) de la roue (7) respective, et la grandeur de mouvement (18) étant décrite par les impulsions de vitesse de rotation (40).

3. Procédé selon la revendication 2, la direction de mouvement étant déterminée en se basant sur une confrontation (57) des impulsions de vitesse de rotation (37) issues du capteur de vitesse de rotation de roue (19) d'une première roue (6) des roues (6) du véhicule (2) et des impulsions de vitesse de rotation (37') issues du capteur de vitesse de rotation de roue (19) d'une deuxième roue (6) des roues (6) du véhicule (2) .

4. Procédé selon la revendication 3, la confrontation (57) comprenant en outre une comparaison visant à vérifier si une impulsion de vitesse de rotation (37) issue du capteur de vitesse de rotation de roue (19) de la première roue (6) du véhicule est suivie immédiatement dans le temps par deux impulsions de vitesse de rotation (37', 40) issues du capteur de vitesse de rotation de roue (19) de l'autre roue (6) du véhicule (2).

5. Procédé selon l'une des revendications précédentes, comprenant :
- acquisition d'une grandeur de mouvement comparatif (18, 37') qui décrit un mouvement comparatif du véhicule (2),
- intégration de la grandeur de mouvement comparative (18, 37') mesurée en fonction d'une direction de mouvement comparatif du véhicule en une course de mouvement comparatif, et
- décision relative au mouvement (17) à reconnaître lorsque la course de mouvement (43) ainsi que la course de mouvement comparatif remplissent toutes deux la condition prédéfinie (44).

6. Procédé selon la revendication 5, la grandeur de mouvement comparative (18, 37') étant décrite par les impulsions de vitesse de rotation (40, 37') et la direction de mouvement comparatif étant déterminée en se basant sur une confrontation comparative (57) des impulsions de vitesse de rotation (40, 37') issues du capteur de vitesse de rotation de roue (19) d'au moins deux roues (6) du véhicule (2), parmi lesquelles au moins une roue (6) est une troisième roue (6) des roues (6) du véhicule (2).

7. Procédé selon la revendication 5 ou 6, un nombre de courses de mouvement comparatif sur lesquelles s'appuie la décision relative au mouvement (17) à reconnaître et/ou la condition prédéfinie (62) étant dépendants d'une pente (5) d'un sol (1) sur lequel se trouve le véhicule (2).

8. Procédé selon l'une des revendications précédentes, comprenant :
- réinitialisation de la course de mouvement (43) et/ou de la course de mouvement comparatif lorsque la course de mouvement (43) et/ou la course de mouvement comparatif remplissent une condition prédéfinie supplémentaire, notamment différente de la condition prédéfinie (44) .

9. Procédé pour resserrer un frein de stationnement (10) qui maintient immobile un véhicule (2) arrêté en stationnement, comprenant :
- reconnaissance d'un mouvement (17) du véhicule (2) arrêté en stationnement avec un procédé selon l'une des revendications précédentes,
- resserrage (22) du frein de stationnement (14) en se basant sur le mouvement (17) reconnu.

10. Dispositif de commande (27, 21) qui met en oeuvre le procédé selon l'une des revendications précédentes.
